# EUROPEAN PATENT SPECIFICATION

(11) **EP 0 819 333 B1**
(45) Date of publication and mention of the grant of the patent: **20.10.1999**
(21) Application number: 96908232.0
(22) Date of filing: 29.03.1996
(51) Int. Cl.: H02K 33/16, F04B 35/04

(54) **LINEAR MOTOR COMPRESSOR AND ITS APPLICATION IN COOLING SYSTEM**
LINEARMOTORKOMPRESSOR UND SEIN ANWENDUNG IN EINER KÜHLVORRICHTUNG
COMPRESSEUR A MOTEUR LINEAIRE ET SES APPLICATIONS DANS LES SYSTEMES DE REFROIDISSEMENT

(30) Priority: 03.04.1995 GB 9506835; 03.04.1995 GB 9506851; 03.04.1995 GB 9506852; 14.08.1995 GB 9516653; 01.12.1995 GB 9524665; 12.01.1996 GB 9600687
(43) Date of publication of application: 21.01.1998
(60) Divisional application: 98203838.2
(73) Proprietor: Z&D Ltd., London N1 1HA (GB)
(72) Inventor: Z&D Ltd., London N1 1HA (GB)
(86) International application number: GB9600749
(87) International publication number: WO9631937

(56) References cited:
- WO-A-94/14173
- DE-C- 407 726
- FR-A- 2 603 348
- US-A- 3 274 795
- US-A- 3 891 874

## Description

### Technical Field of Invention

This invention relates to a linear motor and a compressor incorporating such a mirror.

### Background of Invention

It is known that a conventional reciprocating compressor is driven by a rotary motor, in which a crank or cam mechanism is used to convert motor's rotational movements into reciprocating movements of one or more pistons. Such an compressor has the following drawbacks. Firstly, the arrangement is not efficient because its electric input has to drive a chain of mechanical parts, including unavoidably a motor rotor a crankshaft, a piston-rod and a piston-head. Keeping such a chain of parts in operation per se consumes a lot of power before any useful work can be done to the working medium. Secondly, due to the conversion from rotary to reciprocating movements it is unavoidable that the piston-head is subject to sideways forces, which cause friction and wear and produce unwanted heat. To cope with this problem, it is necessary to incorporate further arrangements for supplying lubricant oil to the moving parts and keeping the mechanism cooled, which add more complications to the structure and further burden to the motor. Furthermore, due to the above reasons the parts used in such a compressor have to be made of high strength materials by precise machining processes, therefore high costs. Finally, the compressor, once built, has to work within a narrow range of rated working conditions with little flexibility to cope with changes of operation conditions or load.

### Summary of Invention

It is, therefore, a general object of the invention to provide a linear motor and a compressor which overcomes the above problems and disadvantages. This is achieved by apparatus as defined in the appended claims 1 and 2.

According to one aspect of the invention, there is provided a reciprocating motor and/or a compressor using such a motor, comprising: two opposing magnetic driving members with coaxial poles: a reciprocating member, serving as a piston in the compressor, with magnetic poles disposed movably between and coaxially with said driving members; and means for energising said driving members and/or reciprocating member to generate an alternating electromagnetic field therebetween; wherein said poles of each said driving member include an outer one of a first polarity and an inner one of a second polarity located within said outer one, and said reciprocating member has complementary poles arranged therebetween to form a push-and-pull driving force pair for said reciprocating member to reciprocate.

It is preferable that each driving member is an electromagnet having conical pole faces, and the reciprocating member has pole face formed by permanent magnet, so as to provide concentric driving forces to suspend the reciprocating member magnetically.

The piston can have a permanent magnet with a radially arranged magnetic field and a shunt mechanism to regulate its magnetic flux to the driving members. Furthermore, sliding pole pieces can be arranged to improve the piston's flexibility and agility for a better energy efficiency. It is preferable to provide a lubricant circulating circuit in the compressor to keep the piston's sliding parts lubricated. Fluid dynamic and/or magnetic means can be used to cause the piston to rotate during its reciprocating movements, so as to improve its lubrication and reduce its wear. Also, buffer mechanisms can provide cushion effects to protect the reciprocating member at the end positions of its movements, including fluid cushion, spring cushion and/or magnetic cushion. Furthermore, the buffer mechanisms can also be used to balance the reciprocating member's movements in opposite directions to improve its energy efficiency. The driving members can have magnetic coupling means to selectively adjust the magnetic flux of each driving member according to the position of the reciprocating member. The mechanism can be powered by either AC or DC current. It further comprises sensor means which adjust the AC current or reverse the DC current in response to the movements of said reciprocating member to each end position. At least one driving member can be arranged in a manner that its position is adjustable in response to the output pressure to provide automatic compensation to load changes.

The fully "floated" piston reduces friction to ensure a long service life. In case of high pressure application, a plurality of the reciprocating compressors can be connected in series to build up output pressure, so a wide range of application requirements can be met by combining standard modules.

### Brief Description of Drawings

The above described objects, aspects, features, advantages, and structural and functional details of the invention will become apparent in the following description of the embodiments with reference to the accompanying drawings, in which:
Fig. 1 is a cross-sectional view taken along the central axis of a compressor according to a first embodiment of the invention;
Fig. 2 is a cross-sectional view taken along the plane B-B shown in Fig. 1;
Fig. 3 is a cross-sectional view of a compressor of a second embodiment;
Fig. 4 is a cross-sectional view of a compressor assembly according to a third embodiment;
Fig. 5 is a cross-sectional view taken along the plane C-C shown in Fig. 4;
Figs. 6A and 6B are cross-sectional views of a compressor according to a fourth embodiment;
Figs. 7A and 7B are sectional views of the piston 560 shown in Figs. 6A and 6B:
Figs. 8A and 8B are sectional views of the electromagnet 530 and its cushion arrangements 540 and 550, as shown in Figs. 6A and 6B;
Figs. 9A and 9B are cross-sectional views of a piston according to a fifth embodiment;
Figs. 10A and 10B are sectional views of magnet disc 610 and a magnet ring 640' taken along the planes C-C and D-D, respectively, as shown in Fig. 9A;

### Detailed Description of Preferred Embodiments

In the following description, the illustrated embodiments are described as compressors for the sake of easy understanding. The same concept can be used for a liquid pump or a vacuum pump. The term compressor should be interpreted as covering all these applications, unless stated otherwise specifically. Also, the same concept can be used to build a linear motor by simply removing valves and seal members.

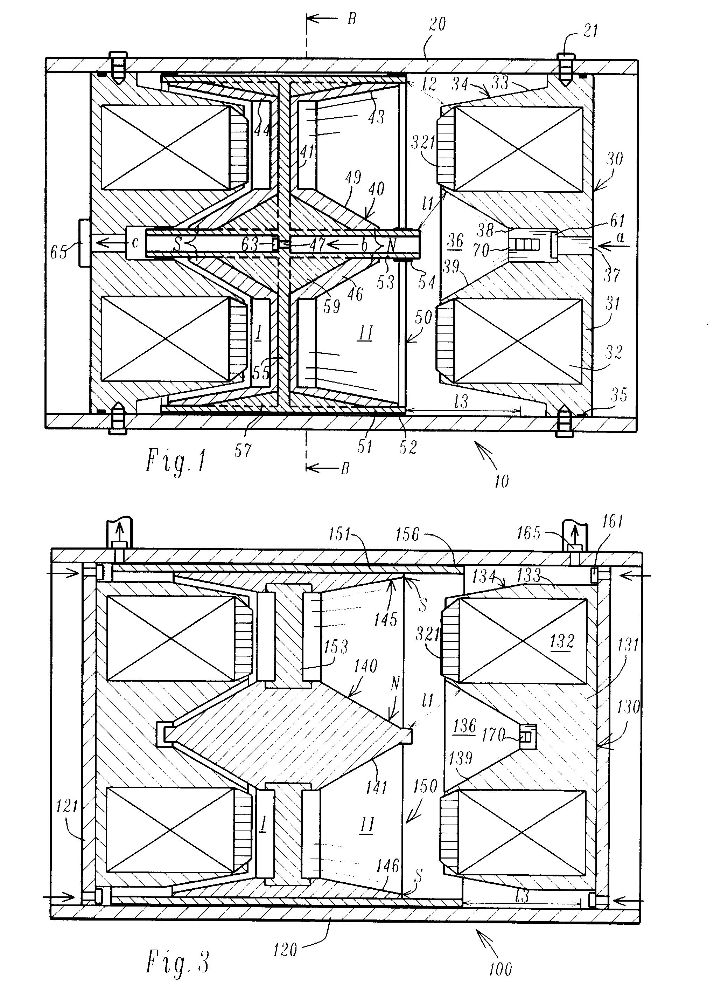

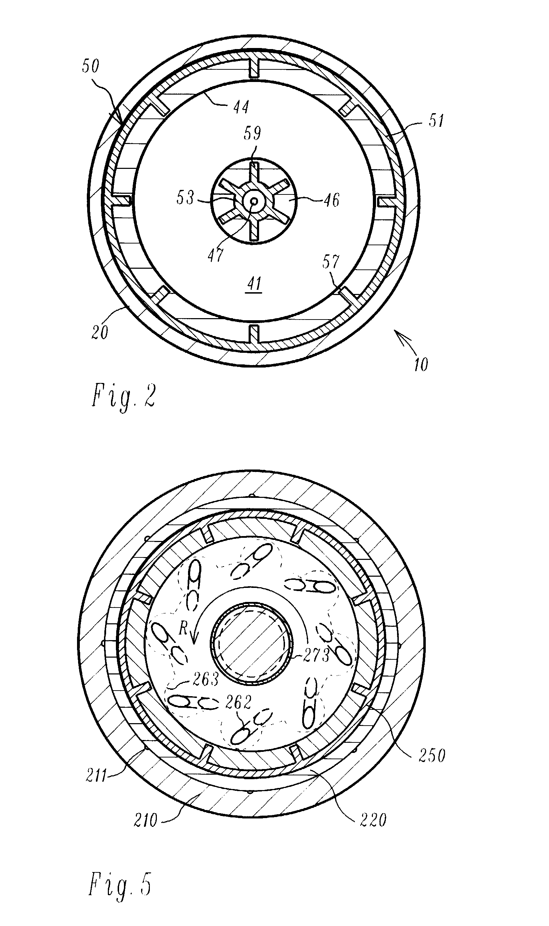

Figs. 1 and 2 show a compressor 10 having a housing 20, two electromagnets 30 fitted to two ends of the housing, and a free piston 50 in the housing, dividing its inner space into chambers I and II. The housing 20 is a cylinder which can have external ribs and/or fins to improve its mechanical strength and heat dissipation, especially when it is used as a gas compressor. It can be made of any non-magnetic material, such as plastics, fibre-reinforced resin, ceramics, aluminium copper, brass, stainless steel etc. In case of the application as a gas compressor in a cooling system, metals are preferable for good heat dissipation. A low friction and wear resistance coating (not shown) can be formed on its inner surface by conventional methods.

The two electromagnets 30 have basically the same structure, i.e. each has an annular core with an outer pole 34 and a coaxial inner pole 36, which is connected to the outer pole by a connection portion 31. A toroidal coil 32 is fitted in the space between the poles 34 and 36. The pole 34 has all outer surface which is formed by a conical portion 33, and a cylindrical portion engaging the inner surface of the housing 20. Two seals 35 are fitted to this cylindrical portion to ensure an airtight engagement between the electromagnet 30 and the housing 20, which are secured by fixing members 21. The inner pole 36 has a central hole formed by a small through-hole portion 37, a cylindrical middle portion 38 and a conical portion 39 extending towards the free end of the pole 36. An one-way valve 61 or 65 is fitted to one end of the through hole 37 of each electromagnet 30 to cover the hole 37 forming an one-way fluid communication between the exterior of the housing 20 and each of the chambers I and II. The leading edges of the poles 34 and 36 are separated by a nonmagnetic member 321, which can be a part of the bobbin for the coil 32. The core of the electromagnets 30 can be made of any "soft" magnetic material, such as iron, steel or ferrite, and it can be made by moulding, casing or die-pressing, using particles of magnetic material held together by a bonding agent, e.g. a resin.

The piston 50 is axisymmetrical and also symmetrical about the central plane perpendicular to its axis, i.e. its left-hand half is a mirror image of its right-hand half. The piston 50 has a supporting frame formed by a non-magnetic material, including an outer cylinder 51, an inner tube 53 and a central disc 55 connecting the outer cylinder 51 to the inner tube 53. The material of the disc 55 is thicker than that of the cylinder 51 or tube 53, and a numher of ribs 57 and 59 are formed to further strengthen the connection between the cylinder 51 and the disc 55 and between the tube 53 and the disc 55. The central disc 55 is perpendicular to the central axis of the cylinder 51 and the tube 59, which are coaxial. At each end of the outer surface of the cylinder 51 there is a seal 52 made of low friction and wear resistance material for forming an airtight engagement with the inner surface of the housing 20. To further reduce the frictionnal resistance between them, the seal 52 can have by a number of spiral ridges. At the central point of the disc 55 there is a through hole 47 which forms the only fluid communication between the two chambers I and II, via an one-way valve 63. The piston 50 carries on each side thereof, a permanent magnet 40 formed in a structure which is generally complementary to the configuration of the two poles of a corresponding electromagnet 30. That is to say that each permanent magnet 40 has a central pole 46 with a conical outer surface portion 49 corresponding to the conical surface portion 39 of the electromagnet's inner pole 36, and an annular outer pole 44 with a conical inner surface portion 43 corresponding to the conical outer surface portion 33 of the outer pole 34. The central and outer poles 46 and 44 are magnetically connected to each other by a magnetic layer 41 formed on the non-magnetic disc 55, so that the two magnets 40 are magnetically insulated from each other. As shown in the left-hand side of Fig 1, the permanent magnet 40 is attracted towards the electromagnet 30 at left end of the compressor 10 so that their corresponding poles are brought close to each other. The leading end of the tube 53 has a seal 54 which forms an airtight contact with the middle portion 38 of the inner pole 36 of the left-hand electromagnet 30.

The supporting frame of the piston 50 can be formed by moulding, casting or die-pressing. Preferably it is the same material as that of the housing 20 so that they have the same thermal expansion during operation. The magnets 40 can be formed by a separate casting or pressing step after the supporting frame has been made. It is preferable to use rare-earth material for forming the magnets 40, so as to have high magnetic strength and low weight. The magnets 40 can be formed as a thin layer on the frame or even as a film of magnetic coating, as long as they provide a strong enough magnetic field and the required general configuration. An extra coating of a magnetic conductive material can be formed on the surface of the central tube 53 and the cylinder 51 before the magnet is formed on top of it, to make their axial ends magnetically conductive.

Since both the housing 20 and the supporting frame of the piston 50 are non-magnetic, the two pairs of the permanent magnets 40 and the electromagnets 30 are magnetically separated. The polarity of the poles of the electromagnets 30 and the permanent magnets 40 are arranged in a manner that when the two electromagnets are energised at the same time, they provide a combined push-and-pull force onto the piston 50, forcing it to move towards one end of the compressor 10 (the left-hand end as shown in Fig I). When the current is changed, the push-and-pull force will also reverse to force the piston to move to the other end. One way of arranging the magnetic polarity is to keep the inner pole 36 of the two electromagnets 30 at the same polarity while the two inner poles 46 of the magnets 40 are in different polarity. For example, the left-hand one is S and the right-hand one is N as shown in Fig 1.

The conical portions 33 and 39 of the electromagnets 30 and the conical portions 43 and 43 of the magnets 40 have the effects of reducing the air gaps between them, while at the same time allowing a relatively long stroke length for the piston movement. As shown in Fig 1, the lengths of the maximum air gaps are *l*_{*1*} and *l*_{*2*} respectively, while the stroke length is *l*_{*3*}, which is significantly longer. When the piston is at an end position, one pair of magnets would have a minimum gap, as the left-hand pair shown in Fig. 1. At this status the pair would have the maximum repelling force when the current through the coil 32 is reversed. This would compensate the weak attraction of the other pair which have the maximum gap. As the gap increases at one side of the piston the other side decreases so the combined push-and-pull force by the two sides would be stable. The arrangement has the effects of reducing magnetic leakage to the exterior of the housing for the flux is evenly distributed around the central axis. This will in turn form an evenly distributed concentric driving force between each magnet pair. By such a driving force, the piston is magnetically suspended and axially aligned. therefore the friction between the piston 50 and the housing 20 is minimized. Since the piston 50 is the only movable component in the compressor, the above "floating" effects of the annular magnetic field would prolong the service life of the compressor sigitificantly.

The fluid circuit through the compressor 10 is formed by three one-way valves 61, 63 and 65 which connect the inlet (right-hand end as shown in Fig. 1) to chamher II, then to chamber I and finally to the outlet. The valves 61, 63 and 65 can be any conventional type. such as flap valve, disc valve or ball valve.

As shown in Fig. 1, the seal 54 at left-hand free end of the piston's central tube 53 also serves as a valve to stop fluid flow from the chamber 1 to the outlet valve 65, therefore the remaining space of the chamber I becomes a "dead" space because the fluid in the space is trapped and cannot flow out. This is designed to work as a cushion to prevent the piston 50 from hitting the electromagnet 30 at the left-hand end of the compressor. The seal 54 at the other end of the piston works in the same way in an opposite stroke of the compressor. The size of this buffer space depends on whether the fluid is gas or liquid, and it can be easily adjusted by changing the axial position of the seals 54 along the tube 53. In case of a gas compressor, the space needs to be relative larger to allow the gas trapped in the space to be compressed so the seals 54 are positioned at leading edge of each end of the tube 53, and the space would work as a gas spring, while in case of a liquid pump, the space can be smaller and the seal 54 can be positioned backwards or even omitted because the narrow gap between each end of the tube 53 and the inner wall of the corresponding hole 38 would be small enough to restrict flow rate of the liquid so as to effectively buffer the piston's movement. When the two strokes of the piston 40 are subject to different resistance, e.g. due to higher output pressure which produces higher resistance to the output stroke, the seals 54 at the two opposite ends of the tube 53 can be located at different positions relative to the respective leading edge have different buffering effects which balance the piston's movement.

It is clear now that although the piston 50 itself is made of light material and carries highly fragile permanent magnets, it is nevertheless fully protected and highly durable due to the evenly distributed driving forces and the fluid buffer arrangement.

For control purposes, a sensor 70 is fitted in the through-hole 38 of each electromagnet 30, for detecting the position of the piston 50. The sensor 70 can be simply a series of electric contacts which are connected when in contact with the seal 54 which is made conductive. The sensor can also be capacitive or magnetic type, which produces sensing signals without physical contact. The output signals from the sensor 70 are used to control the current to the coil 32 of the electromagnet 30 in response to a change of load. For example, when the electromagnet 30 is powered by an AC input, the signals from the sensor 70 are compared with the phase of the input current to see whether the current is too large or too small. In case the input current is too large, the magnetic driving force to the piston would also be large so the piston 50 would move faster and arrive at the end position earlier, while when input is too small, the magnetic force would be small and move the piston slowly, so it arrives at the end position later, or even not arrive at the position of the sensor at all. This would be checked by the sensor, and the input current can be adjusted accordingly. When DC power is used, the signals from the sensors 70 are used to switch the DC input, causing the piston to reciprocate.

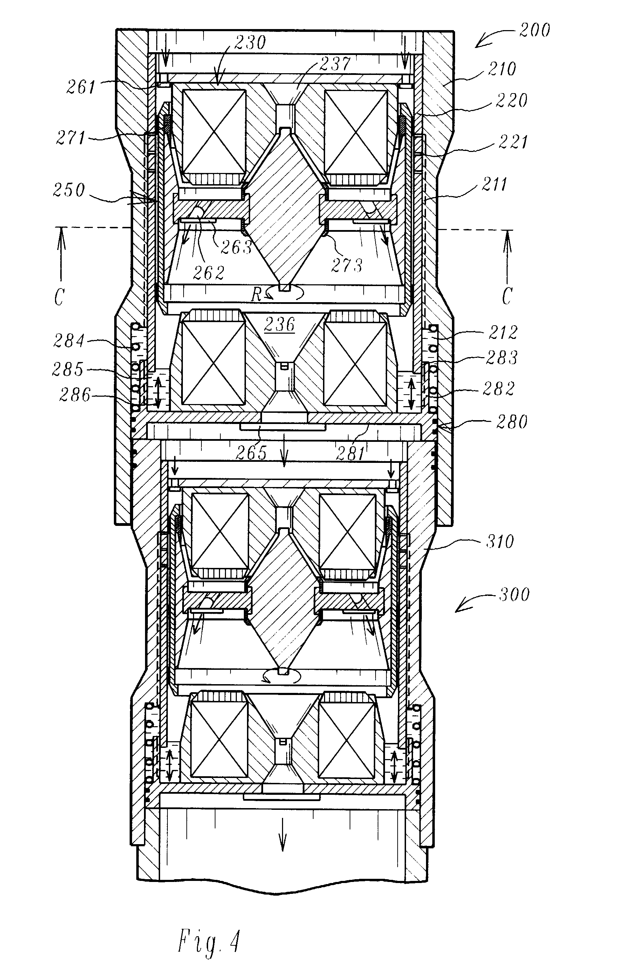

Fig. 3 shows a compressor 100 has a cylindrical housing 120, two electromagnets 130 fixed via supporting plates 121 to each end of the housing and a piston 150 between the two electromagnets. Inlet valves 161 are also fitted on the plates 121. Each electromagnet 130 has an annular core providing two poles 134 and 136 and a coil 132 fitted between them. A central conical cavity 139 is formed in the central pole 136. The piston 150 has a central permanent magnet 140 having two conical tips, a cylindrical permanent magnet 145 and an annular member 153 of non-magnetic material for securing the tow magnets 140 and 145 together. The magnet 145 is surrounded by a cylinder 151 which is non-magnetic, preferably the same material as the housing 120. The cylinder 151 has seals 156, similar to that of the first embodiment. The tips of the permanent magnet 140 are shaped to fit into the central cavity 139 of the electromagnets 130 when the piston is attracted to one of the electromagnets. The pole direction of the two electromagnets 130 are arranged in the same manner, that is to say, when an electrical current is supplied to each of the coils 132, the central poles 136 are both North, In this case the piston 150 is attracted to left as shown in Fig. 3 and repelled from right. By changing the current direction in the coils 132, the piston moves back. The inlet valves 161 are arranged at two ends so that when the piston 140 is moved from right to left, the valves 160 at right end are opened to let the fluid into the chamber II while the outlet valve 165 at the left end is opened to let the fluid to be forced out of the chamber 1. When the piston arrives at the end position as shown in Fig. 3, the leading edge of the outer cylinder 151 blocks the outlet valve 165 to form a buffer space, similar as the first embodiment. In this embodiment the second permanent magnet 145 is not essential for its operation. When the magnetic field provided by the magnet 140 is strong enough, the magnet 145 can be replaced by a magnetically conductive member. This embodiment provides a well balanced operation in the sense that the piston's left and right strokes have exactly the same fluid compression function, and are subject to the same moving resistance. When two identical compressors 100 are arranged end to end along the same axis, and their pistons are made to move always in opposite directions, e.g. by connecting the electric supply in opposite direction, the pair would provide a highly balanced arrangement in which the impacts by the two pistons always cancel each other so the pair as a whole cause virtually no vibration. Obviously, the arrangement would be highly beneficial to the applications where low noise and vibration are required.

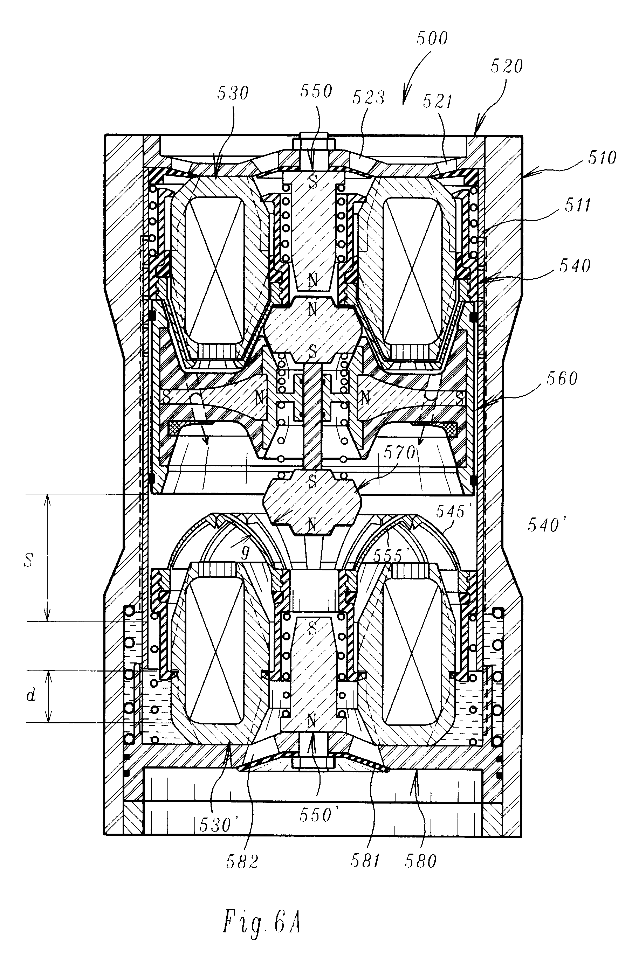

Fig. 4 shows a compressor assembly according to a third preferred embodiment. Fig. 5 on sheet 2 of the drawings is the cross-sectional view taken along the plane C-C in Fig. 4. showing details of the piston 250. In Fig. 4, the assembly is a multistage arrangement formed by two serially connected compressors, 200 and 300, which are of the similar structure. The difference between them is that the first stage compressor 200 is one size larger than the next stage compressor 300, so a gaseous working medium can be progressively compressed. If the working medium is liquid, the chain should be made of pumps of the same size for the liquid is not compressible, but the operating principles are the same. Obviously, further stages of compressors can be connected for a higher output pressure, and adapter members can be used between compressors. In the following description, only the details of the compressor 200 are explained. The compressor 200 has a tubular housing 210 with a liningt member 220, two electromagnets 230, a free-piston 250 and a movable support 280. The electromagnets and the piston work in the similar manner as the previous embodiment.

In Figs. 4 and 5, the lining member 220 is secured inside the housing 210 by thermal fitting, i.e. by fitting a cool lining 220 into a heated and expanded casing 210 so that when it cools down the housing grips the lining firmly. The one-way fluid communication through the compressor 200 is formed by the inlet valves 261, piston valves 263 and an outlet valve 265. As shown in Fig. 5, the piston valves are formed by a numher of angled through-holes 262 formed on the piston disc, directing fluid flow in outward tangential direction. A flap member indicated by the dot line encourages such outward flow, causing the piston to rotate, as shown by the arrow sign R.

Between the piston 250 and each of the two electromagnets 230 and 230', a buffer mechanism is formed by seals 271 and 273. When the piston 250 moves upwards to the end position as shown in Fig. 4, the seal 271, on the inner surface of the piston cylinder, acts with the outer cylindrical surface of the top electromagnet 230 to form an annular gas cushion between the leading edge of the piston cylinder and the inlet valves 261 on the supporting plate of the top electromagnet 230. At the same time, the inner seal 273 engages the central cavity of the electromagnet 230 to form a central gas cushion in the top cavity 237. These two cushions protect the piston from hitting the upper electromagnet 230. When the piston moves downwards to the lower end, the other inner seal 273 would block the outlet valve 265, forming a cushion between the piston disc and the top end of the lower electromagnet 230'. Luhricant 285 collected around the electromagnet 230' would also have buffer effects.

The movable support 280 carries the lower electromagnet 230' and the outlet valve 265. The support 280 has a base 281, a sleeve 282 and a biasing spring 284, which urges the base away from the piston. The leading edge of the sleeve 282 forms a sliding contact with the lower edge of the lining 220, and defines a chamber 212, in which is located the spring 284. The sleeve 282 also serves as a stopper, when it contacts with the top edge of the chamber 212, to define the upmost position of the support 280. The range of movement for the support 280 is shown by the double-arrow sign 286. In operation, when the output pressure is low, e.g. during the start-up of the compressor, the spring 284 urges the support 280 downwards against the leading end of the next stage compressor 300, and at this position the piston has the longest stroke, so the compressor has the largest throughput. As the output pressure is gradually huilt up, the total force on the bottom surface of the base 281 would eventually become larger than the biasing force of the spring 284, so the support 280 would be forced to move upwards. This movement reduces the stroke length therefore reduces the output by each stroke. Furthermore, due to the reduced stroke length, the average air gap in the magnetic circuit is also reduced, with the effect of an increased driving force, producing a higher output pressure. When there is a hig enough drop of the output pressure, e.g. due to an increased release of the compressed medium at the system outlet, the support 280 would immediately resume its original position under the biasing force of the spring 284, then the compressor is ready to work at its maximum output rate. That is to say, the compressor change automatically from a low-pressure high-output operation to a high-pressure low-output operation, or vice versa. This automatic adjustment becomes more beneficial when a numher of compressors are connected serially in a multistage arrangement, in which each of them can adjust its own rate to match with the others in the chain so that the load is evenly distributed over the whole chain.

A lubricant 285 used in the compressor 200 keeps the outer surface of the piston 250 and the inner surface of the lining 220 lubricated, and it would end up in the collecting area around the lower electromagnet 230'. A luhricant circulating circuit is formed by the grooves 283 formed on the inner surface of the sleeve member 282, the chamber 212, the grooves 211 formed between the housing 210 and the liming 220, and the through-holes 221 which return the lubricant back to the piston. The grooves 211 and 283 are made small enough so that the lubricant is sucked into the grooves mainly by capillary effects. When the piston 250 moves downwards. the increased pressure on the liquid surface would help the liquid into the chamber 212 then to enter the capillary grooves 211, while on the other hand the holes 221 would be exposed to the low pressure side of the piston, allowing the liquid to come out of the grooves. When the piston moves upwards in a return stroke, the valves 263 would open, causing the piston to rotate as mentioned above, therefore to spread the luhricant evenly around the whole inner surface of the liming 220, forming a film of luhricant between the outer surface of the piston and the inner surface of the lining 220. This film also improves the sealing around the piston. The holes 221 are positioned so that they are covered when the piston is at its upper position, not causing gas leakage between the two sides of the piston.

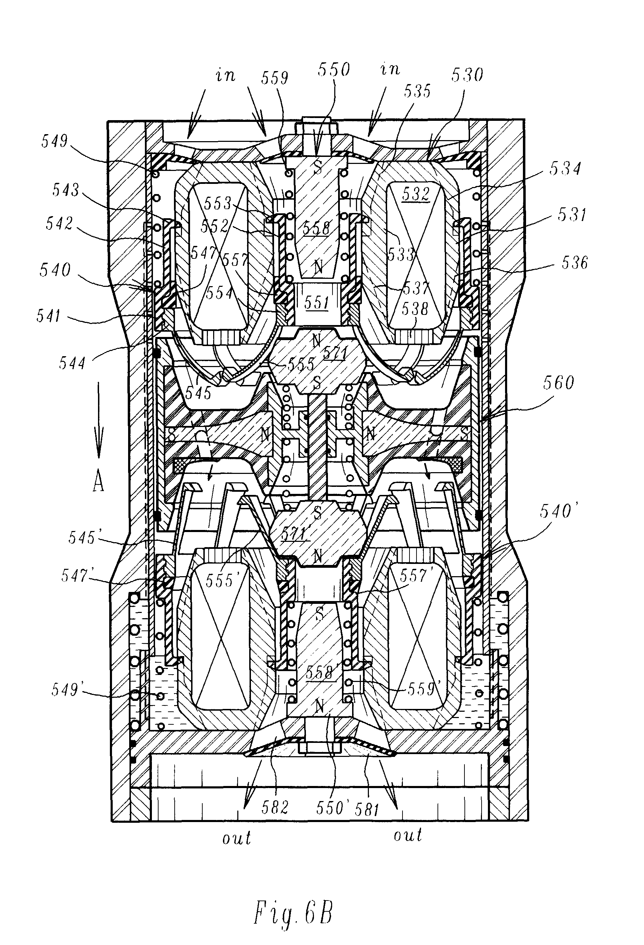

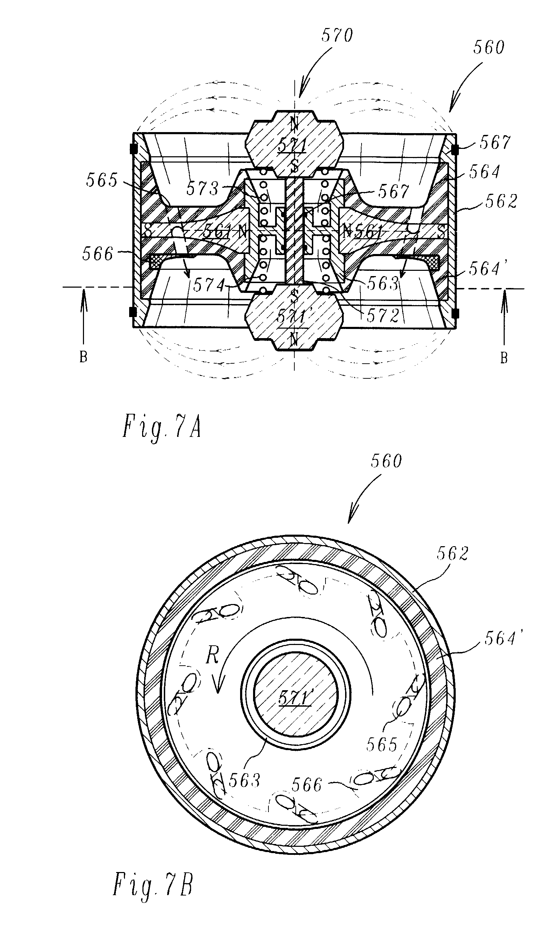

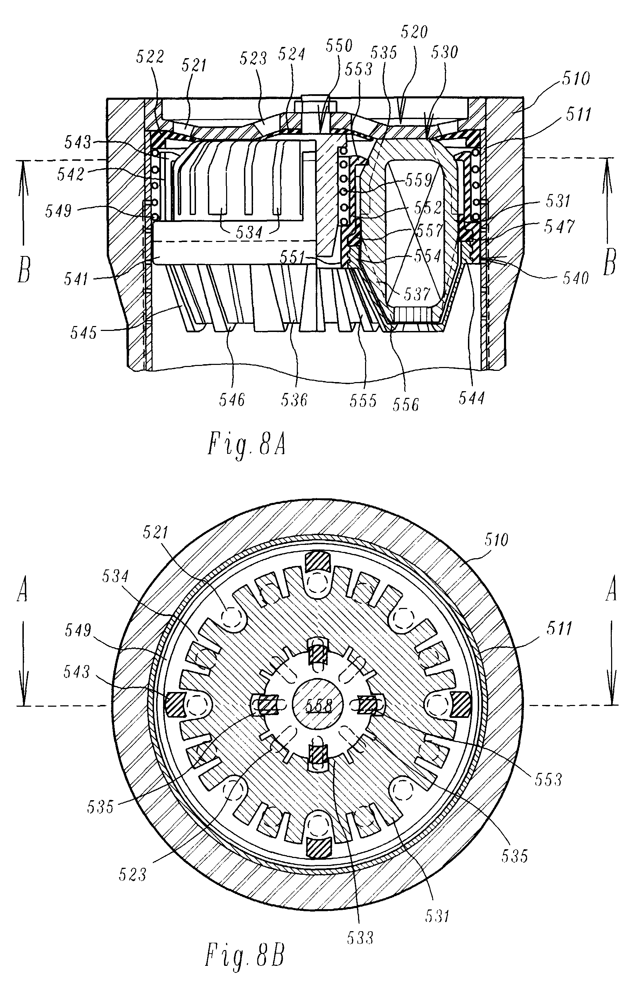

Figs. 6A to 8B show a compressor 500 according to a fourth embodiment. Figs. 6A and 6B are cross-sectional views showing the positional change of the different parts of the compressor during its operation. Fig. 7A shows more details of the piston 560, and Fig. 7B is the cross-sectional view taken along the plane B-B in Fig. 7A. Similarly, Figs. 8A and 8B show the details of the electromagnet 530 and buffer arrangements 540 and 550.

In Fig. 6A, the compressor 500 has a housing 510 with a lining 511 similar to that shown in Figs. 4 and 5, a free piston 560 with an active magnetic shunt mechanism 570, two electromagnet, 530 and 530', one supported by a plate 520 and the other by a movable support 580. Each electromagnet has outer and inner buffer mechanisms 540 and 550, or 540' and 550' for cushioning the piston 560. The end plate 520 and the movable support 580 also provide the fluid inlets 521 and 523 and outlets 582, respectively. The lining member 511, which is made of non-magnetic steel, and the movable support 580 are similar to and operate in the same way as the members 220 and 280 shown in Fig. 4 to provide luhricant circulation and automatic stroke length adjustment. When the compressor 500 is used to work with a liquid, e.g. it can be used as a hydraulic pump for high pressure and leak-free applications, the piston can be lubricated by the working medium therefore the lubricant circulation arrangement would not be needed. In this case further outlet holes can be formed close to the outer periphery of the support 580 to match the holes 521 on the top end plate 520.

When analysed from the viewpoint of the fluid compression, the piston's down strokes suck in fluid through the inlet holes 521 and 523 on the top plate 520, and at the same time drive the fluid already in the compressor out of the outlet holes 582 in the bottom support 580. In contrast, the upward strokes merely force the fluid from upper side of the piston to its lower side without producing any output. That is to say, the two strokes are unbalanced with most of the actual work done by the downward strokes and with its upward strokes simply as return movements. Such unbalanced piston movements reduce the compressor's energy efficiency. In order to tackle this problem, arrangements are made in the compressor 500 to balance the two types of strokes by converting the kinetic energy of the upward piston movements into energy reserve in different buffer mechanisms, which is then released during the piston's downward strokes. These arrangements include the inner and outer buffers 540, 550, 540' and 550' associated with the two electromagnets 530 and 530' and the springs in the shunt mechanism 570.

In Fig. 7A, the piston 560 has a main permanent magnet 561 in the shape of an annular disc. The polarity of the magnet 561 is in radial direction, i.e. with its outer periphery as the south S, and the inner periphery as the north N. The thickness of the disc 561 increases from its outer periphery inwards to ensure that the inner and outer pole faces are of the similar sizes and the cross sectional area perpendicular to the magnet flux maintains unchanged along the flux direction to avoid local flux saturation. A cylindrical magnetic member 562 is secured to the outer periphery of the disc 561, serving as the pole piece for the outer pole and a generally tubular pole piece 563 is secured to the inner pole, so as to form generally radially directed magnetic flux between them, as shown by the dash lines in Fig. 7A.

The disc 561 is sandwiched between two protection member 564 or 564' to protect this relatively brittle member from being damaged by mechanical shocks and also to hold the disc and its two pole pieces together. The two members 564 and 564' can be formed by injection moulding, preferably by using gasified plastics or foamed rubber, after the disc and the pole pieces having been assembled so as to form an integrated structure of good mechanical strength and light weight. The members 564 and 564' also define smooth surfaces which closely match with the pole faces of the two electromagnets, to reduce any "dead space" between the piston faces and the driving electromagnets. The member 564' also has a groove fitted with a valve member 566. As also shown in Fig. 7B, a numher of angled through-holes 565 are formed in the disc 561 and the protection members 564 and 564', which are covered by the valve member 566 for causing the piston 560 to rotate in direction R, similar to the previous embodiment.

The inner pole piece 563 has a central supporting part 567 which carries a magnetic shunt mechanism 570. The shunt 570 is formed by two permanent magnets 571 and 571' connected together by a non-magnetic bar 572. The bar 572 is movably supported by the part 567 which has seals to prevent any leakage through the sliding engagement between them. Two springs 573 and 574 are each used between the part 567 and one of the magnets 571 and 571' to provide biasing forces. Low friction bushing is used for the springs to allow the shunt to rotate relative to the piston. The springs 573 and 574 are made of magnetic steel so they also provide magnetic connection, via the inner pole piece 563, between the magnet 571 or 571' and the disc magnet 561. The polarity of the shunt magnets are arranged in a way that both of them are magnetically attracted by the inner pole of disc magnet 561. The leading face of the shunt magnet 571 or 571' is covered by a soft layer, such as rubber, to protect it.

The piston's magnetic circuit has two branches, each includes an air gap between a leading edge of the pole piece 562 and the pole face of the magnet 571 or 571' for acting with a corresponding electromagnet, and the main magnet 561 serves as the common route shared by the two circuit branches. In Fig. 7A, the magnetic shunt 570 is at a neutral position relative to the disc magnet 561, where the two circuit branches have equal flux distribution indicated by the dash lines. However, this balanced flux distribution is unstable because a very slight axial movement of the shunt 570 relative to the disc 561 would increase the flux in one branch at the expense of the other. In other words, from the viewpoint of the flux distribution the shunt 570 serves as a magnetic switch which decides by its axial position that which circuit branch would have a bigger share of the total flux. This arrangement is also used as a buffer mechanism by having a natural status predetermined for the magnetic switch by the two springs 573 and 574 which are arranged to form a push-and-pull pair. i.e. the upper spring 573 is a compression one which tends to expand and push the magnet 571 upwards and away from the disc magnet 561, while the lower spring 574 is an extension one which tends to contract and pull the magnet 571' towards the disc magnet 561. When not subjected to external forces the shunt 570 would end up at a position where the magnet 571' engages with the lower end of the inner pole piece 563, pushing the other magnet 571, via the bar 572, to a position far away from the top end of the inner pole piece 563. At this position the flux of the lower branch would be much larger than that of the upper branch. In operation the piston has to overcome the biasing forces of the springs 573 and 574 in its return strokes and then release the energy during its output strokes. Furthermore, the axial movement of the shunt 570 switches the main magnetic flux from one end of the piston to the other so as to act with electromagnets 530 or 530' in a more efficient way, as to be described later.

Fig. 8A is a partial sectional view with the right half of the electromagnet 530 and the outer buffer 540 shown in section and their left half in front view. It also shows details of the top end plate 520 and the inner buffer 550. Details of the corresponding members 530', 540' and 550' at the bottom end of the compressor are basically the same, unless to be described otherwise.

More specifically, the end plate 520 is secured onto the housing 510 and it carries the electromagnet 530 and its buffer mechanisms. A series of outer inlet holes 521 and a series of inner inlet holes 523 are formed on the end plate 520, corresponding to the outer periphery and the central hole of the annular electromagnet 530, and being covered by flap member 522 or 524 to form one-way valve. Details of the flap members 522 and 524 are not shown in Fig. 8B but they are similar to the flap member 566 shown in Fig. 7B. The new features of the electromagnet 530 are the angled slots 536 and 537 formed on its outer and inner conical pole faces, and the slots 534 and 535 formed on the opposite end, all in axial direction. The slots are formed to facilitate the fluid flow from the holes 521 and 523 into the compressor chamber and at the same time helping to cool the electromagnet 530 and to reduce eddy currents in the core material. As also shown in Fig. 6B, that the slots 534 and 536 on the surface of the outer pole 531 are not connected to one other, neither the slots 535 and 537 on the surface of the inner pole 533. On each of the surface a narrow band free of any slots remains between the two sets of slots, which co-operates with a seal member 547 or 557 of the two buffer 540 and 550 to provide air cushion effects.

Associated with the electromagnet 530 are the outer buffer 540 surrounding it and an inner buffer 550 in its central hole. The buffer 540 includes a cushion ring 541 biased downwards by an expansion spring 549. The ring 541 has a number of retaining fingers 542 extending in axial direction, each having a hooked tip 543 fitted into one of the slots 534 to define the range of the buffer's movement by the length of the slots 534, as shown in Figs. 6A and 6B. The ring 541 with its finger members 542 is made of a non-magnetic and rigid material, such as aluminium or plastics, to provide good mechanical strength. The ring 541 carries a flux coupler 544 made of a magnetic material, which is in the shape of a ring carrying a member of fingers 545 each with a hooked tip 546. The fingers 545 are made of flexible and resilient material so that the fingers can bend easily when attracted by magnetic force. The tips 546 are rigid and they also have the function of limiting the buffer's upward movement by engaging the leading edge of the outer pole 531. The fingers 545 are configured to fit closely to the conical pole face of the outer pole 531 when the cushion ring is in the contracted position, as shown in Fig. 8A. Shallow groves can be formed on the conical surface so that the fingers 545 can fit into them to provide a smooth pole face to match with the complementing face of the piston 560, as mentioned above. The sealing ring 547 is clamped between the rings 541 and 544, to form an air cushion when it engages the annular band on the outer pole 531.

Similar to the outer buffer 540, the inner buffer 550 has a cushion ring 551 of a non-magnetic and rigid material, biased by a spring 559. The ring 551 has a number of retaining fingers 552 each having a hooked tip 553 fitted into one of the slots 535 to define its movement. A flux coupler 554 has a number of resilient fingers 555 each with a hooked tip 556 to match with a corresponding tip 546 of the outer buffer 540. A sealing ring 557 is fitted between the rings 551 and 554, for forming an air cushion in the central hole of the electromagnet 530. The inner buffer 550 also includes a permanent magnet 558 with a polarity repulsive to that of the shunt magnet 571 for providing magnetic cushion to the piston 560. The operations of the buffers 540 and 550 are to be explained below.

Now the operations of the compressor 500 are to be described with reference to Figs. 6A and 6B, in which different positions of the piston 560 are shown together with the changes of the cushion and driving mechanisms.

Firstly, the operation of the buffer mechanisms is explained in details. Fig. 6A shows that the piston 560 is moved to its up end position where it is well cushioned by the two buffers 540 and 550, which provide air cushion by the effects of the seals 547 and 557, spring cushion by the compressed springs 549 and 559 and magnetic cushion by the central magnet 558 which expels the shunt magnet 571. In Fig. 6B, the pushful 560 is in the middle of its downward stroke, as indicated by the arrow A. At the this particular position, in addition to the magnetic driving force by the electromagnets, the piston's outer cylinder pole piece is pushed downwards by the outer cushion ring 541 and the shunt 570 is forced down by the inner buffer 550. The piston is moving to the bottom end, where the main cushion effect will be provided by the resistance of the compressed fluid, which is being forced tout through the outlet holes 582, together with the effects of the buffers 540' and 550' at the end of the movement. In addition to these, the lubricating liquid surrounding the lower outer periphery of the electromagnet 530' also helps to buffer the piston's final movement, therefore air cushion effects are not provided by the buffers 540' and 550', i.e. their rings 547' and 557' do not have sealing effects.

Since the working load of the piston's upward strokes is smaller than that of the downward strokes, as mentioned before, the upper cushion springs 549 and 559 are selected to be stronger than the springs 549' and 559'. That is to say, the piston's upward strokes are powered basically by the push-and-pull force of the electromagnets alone and the piston's upward kinetic energy is converted into the elastic energy of the springs 549 and 559 for helping the piston's down stroke. Further compensation is made by the permanent magnets 558 and 558', which are arranged with the permanent 558 opposing the piston's upward movement while the magnet 558' attracting its downward movement, forming another push-and-pull pair. Finally the springs 573 and 574 of the shunt mechanism 570 also urges the piston downwards, as mentioned above. Due to these compensating arrangements, a significant portion of the push-and-pull force by the two electromagnets for piston's upward strokes is converted to make the piston's downward strokes more powerful, therefore effectively balanced the piston's movements.

In Fig. 6A, the piston 560 is driven to the top where the upper branch of the piston's magnetic circuit is included into the magnetic circuit of the electromagnet 530. At the same time, the magnetic circuit of the bottom electromagnet 530' is "closed" by the magnetic fingers 545' and 555' of the buffers 540' and 550' because the fingers are raised by springs and magnetised by the electromagnet to attract one another until they bend and their tips contact one another. This magnetic coupling increases the electromegnet's self-induction. therefore reduce the electric current passing through its coil at this particular moment. Since at this moment the distance between the electromagnet 530' and the piston is large, the electromagnet has no important influence to the piston's movement. In other words, electric power consumption by the electromagnet 530' is saved when it is lest effective. In Fig. 6B, here the electric currents to the electromagnets are reversed, the piston 560 is driven downwards so the lower shunt magnet 571' contacts the buffer 550' first to break the magnetic coupling between the fingers 545' and 555'. Once they are separated, the fingers 545' are attracted to the lower edge of piston's outer pole piece to form a more effective magnetic connection between the outer pole of the electromagnet 530' and the outer pole of the piston, and the fingers 555' are attracted to the shunt magnet 571'. Such contacts form direct connection between the lower branch of piston's magnetic circuit and the electromagnet 530', causing stronger attraction between them. On the other hand, once the piston has moved away from the top electromagnet 530, it makes enough room for the fingers 545 and 555, attracted to one another by their magnetic polarity, to bend until they touch one another. When this happens, the magnetic flux from the electromagnet 530 is effectively "turned off" from the piston 560.

It is clear from the above description that by incorporating the magnetic coupling mechanisms, each of the electromagnets is automatically "turned off" when it no longer has effective contribution in driving the piston, therefore the consumption of electric energy at such ineffective moments is significantly reduced and the compressor's overall energy efficiency is improved. Furthermore, the arrangement also improves magnetic connection between the piston and the electromagnet by reducing the average size of the air gaps between them, i.e. increasing the magnetic flux and the effectiveness of the magnetic connection. This is shown by the facts that when in operation the piston has a stroke length *S* shown at the left side of Fig. 6A, while the maximum air gap between the shunt magnet 571' and the magnetic fingers 555' is merely *g*, shown in Fig. 6A. which is much smaller compared with *S*. In addition, each of the buffer mechanisms 540, 550. 540' and 550' has a movable range of *d*, which is slightly less than a half of the stroke length *S*. That is to say. for most of time in operation the piston 560, including the shunt 570, is in direct contact with at least one of the buffers which serves as pole extension to act between the piston and electromagnets.

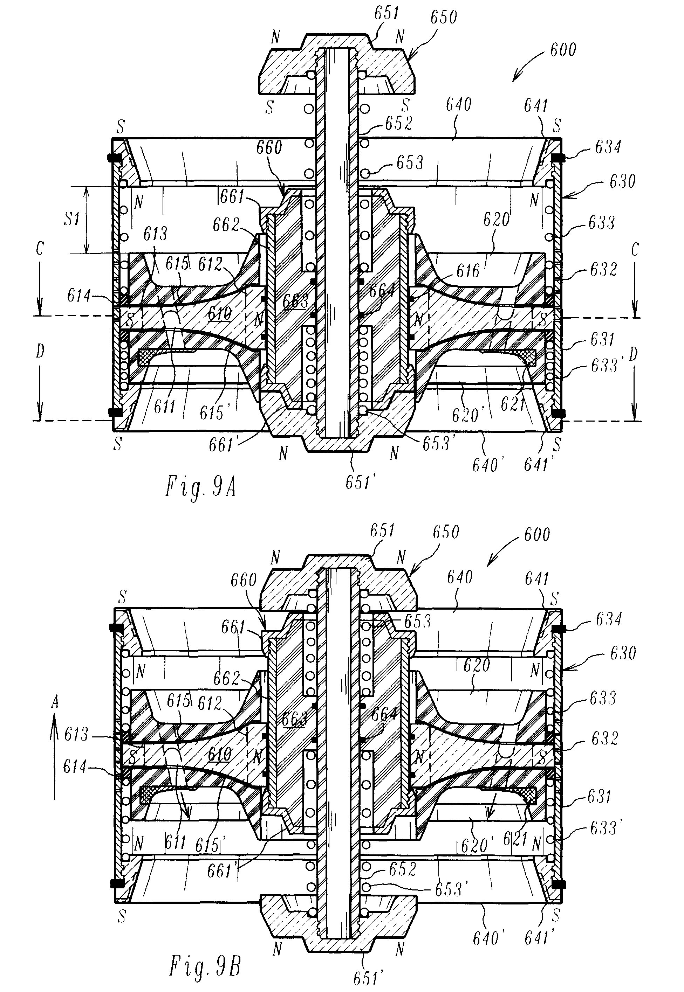

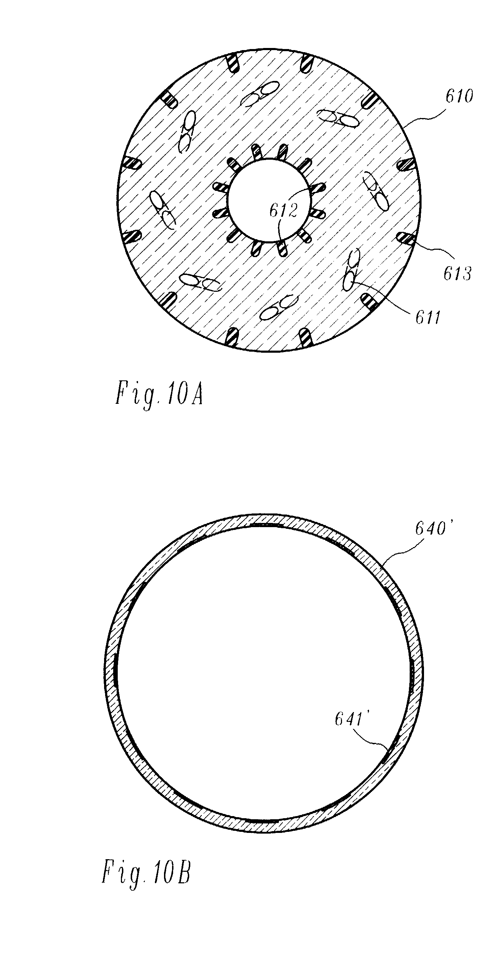

Figs. 9A to 10B show a piston 600 according to a fifth embodiment. This piston can be used in the compressor of the previous embodiment to replace the piston 560, and it is suitable when the compressor's dimensions are large. Figs. 9A and 9B are cross-sectional views showing the positional changes of its different parts during its operation. Fig. 10A is the cross-sectional view taken along the plane C-C in Fig. 9A, showing details of a magnet disc 610, and Fig. 10B is the cross-sectional view taken along the plane D-D in Fig. 9A. showing details of a magnet ring 640'.

In Figs. 9A and 9B, the piston 600 has an annular permanent magnet disc 610 sandwiched between protection layers 620 and 620'. An outer pole piece 630 engages the outer periphery of the disc 610 and an inner pole piece 660 engages its inner periphery. The inner pole piece 660 carries an active magnetic shunt 650 which works in a similar way as that of the previous embodiment. More specifically, as also shown in Fig. 10A, the disc 610 has a number of inner channels 612 and outer channels 613 formed in axial direction on its inner and outer periphery. The protective layers 620 and 620' on two sides of the disc are made by moulding plastic or rubber material to cover both sides and they are connected to each other via these channels to form an integrated body with the disc "caged" inside. This structure protects the hrittle disc and also defines angled valve holes 611 covered by a valve member 621.

Now hack to Fig. 9A. the outer pole piece 630 includes a cylinder member 631 made of a soft magnetic material, which is arranged to have sliding engagement with the outer periphery of the disc 610 fitted with two sliding seals 614. Two permanent magnet rings 640 are each fitted to an end of the cylinder 631, to provide a secondary magnet in each of the two circuit branches of the piston's magnetic circuit. A seal 634 is clamped between each ring 640 or 640' and the cylinder 631. A pair of springs 633 and 633' are each fitted between a ring 640 and a seal 614, to keep the disc 610 biased relative to the rings 640. The inner pole piece 660 includes a magnetic cylinder 662 engaging the inner periphery of the disc 610, two magnetic end caps 661 each fitted to an end of the cylinder 662, and a non-magnetic filling stuff 663. such as gasified plastics. filed in the cylinder 662. The shunt 650 includes two permanent magnet caps 651 and 651' connected to each other by a non-magnetic tube 652, which is supported on the inner pole piece 660 by the filling stuff 663 and sealed by seals 664. A pair of springs 653 and 653' keep the shunt 650 biased relative to the pole piece 660. The magnet cap 651 or 651' is shaped to have a leading surface providing pole face matching with that of an electromagnet as shown in Figs. 6A and 6B, and a hack pole face matching that of the cap 661 or 661'. The magnet caps 651 and 651' form the secondary magnets at the other end of the piston's two circuit branches. The polarities of the main and secondary magnets are arranged, as shown in Figs. 9A and 9B, to make each secondary magnet being attracted by the main magnet 610. When in operation, the disc 610 would slide along the cylinder 631 towards one end, under the effects of the two electromagnets. Fig. 9A shows the disc at its lower end, where the lower protection member 620' engages both the magnet ring 640' and the magnet cap 651' to define a smooth piston face matching that of the pole faces of the lower electromagnet (not shown). At this position, the inner pole of the disc 610 is magnetically connected to the cap 651' via the cylinder 662 and the cap 661' of the inner pole piece 660, so is the outer pole to the magnet ring 640' via the cylinder 631 and the spring 633'. From the viewpoint of the lower electromagnet, the piston 600 behaves as one powerful permanent magnet.

As shown in Fig. 9B, once the electric currents in the two electromagnets are reversed, the piston assembly is forced to move upwards, as indicated by an arrow A to the left. At the same time, since the disc 610 is no longer attracted by the lower electromagnet, it is forced by the springs 633 and 633' to move upwards along the cylinder 631. Similarly, the inner pole piece 660 is also forced upwards by the springs 653 and 653' until the upper edge of the cap 661' engages the disc 610 and carries the same to move with it. Since the inner pole piece 660 is very light and it is not subjected to any significant fluid resistance to its movement, it can move much faster than the disc 610, so as to effectively switch the disk's main magnetic flux from its lower branch to its upper branch, as described before in relation to the previous embodiment. Again, these springs can be arranged to provide more downward biasing forces for balancing the piston's movements. Also the cushioning and magnetic coupling for the piston 600 can be the same. In operation, the disc 610 with its protection layers 620 and 621' can slide a distance *S1* along the outer pole piece 630, in additional to the piston's stroke length *S*, as shown in Fig. 6A. That is to say, the piston's effective stroke length is increased without increasing the pole pieces' movements, so the piston has better agility in response to the driving forces by the electrmagnets. The reduced movements of the outer pole piece 630, which contributes to a very large portion of the piston's total weight due to the steel cylinder 631, ensure that the overall energy efficiency is improved. To keep the piston parts lubricated, a number of small holes are made through the cylinder 631, so that luhricant can enter the gap between the outer periphery of the disc 610 and the inner surface of the cylinder 631. Furthermore, a fabric layer 615 is sandwiched between each side face of the disc 610 and a corresponding protection layer 620 or 620' to provide capillary passages for the lubricant to enter the gap between the inner periphery of the disc 610 and the inner pole piece 660.

Finally, an additional feature is that the leading pole face of the magnet rings 640 and 640' has a number of channels 641 and 641' as shown in Fig. 10B, which match the channels 536 formed on the outer pole face 531 in Fig. 6B. During the operation, these channels have the effects of causing the piston to rotate so that they can align with one another, in a way similar to the toothed patterns in the magnetic core of a stepping motor. By arranging the channels on the two rings 640 and 640' at staggered annular positions, they will ensure, together with the effects of the angled valve holes 611, continued rotation of the piston 600 during its reciprocating movements, so as to improve its lubrication and reduce its wear. The channels 641 are filled by a non-magnetic material to define a smooth piston face.

### Industrial Applicability

The reciprocating mechanisms disclosed above can be used in many different applications. Due to the tubular structure of the embodiments, they are especially advantageous in meeting the needs of all existing system design or hardware pipeline because such a compressor or pump can be easily fitted into an existing system at any position that a driving force is needed, without any need to re-design the system or change the existing hardware. Standard models can be connected serially or in parallel to meet a wide varieties of requirements to output pressures and/or flow rates. The tubular structure of the compressor makes it easy for heat dissipation, therefore ideal for applications in refrigeration and air-conditioning.

The above description is made by way of examples, which also indicates that different features described above, such as the polarity and/or general shape of the poles of the magnets or the flow direction of the valve arrangements, can be modified or changed by combining the described features in different ways. For example, the cross-sectional shape of the arrangement is described as cylindrical, but it can be replaced by other generally symmetrical polygonal shapes, especially when the number of sides of a polygon is large. Furthermore, the pistons with permanent magnets have the advantage of reduced weight, therefore high efficiency. Obviously, electromagnets can be used which have advantages that the magnetism will not be affected by temperature changes, desirable for high temperature applications. On the other hand, when the piston carries an electromagnet, the two driving magnets fitted to the housing can use permanent magnets so as to reduce the total weight of the motor/compressor as a whole.

## Claims

1. A linear motor (10; 100; 200; 300; 500) characterised by comprising: two opposing magnetic driving members (30; 130; 230; 530): a reciprocating member (50; 150; 250; 560; 600) disposed between said two driving members; and means for energising said driving and/or reciprocating members; wherein each said driving member has an outer pole (34; 134) and a coaxial inner pole (36: 136), and said reciprocating member has complementary poles so that when energised, said two driving members produce onto said reciprocating member a push-and-pull driving force pair to cause its linear movement.

2. A linear motor compressor (101 100; 200; 300; 500) characterised by comprising: a cylinder (20; 120; 210: 510) fitted at its two ends with two opposing magnetic driving members (30; 130; 230; 530) to define an inner space therein; a reciprocating member forming a piston (50: 150; 250; 560; 600) disposed in said inner space between said two driving members; valve means (61, 63, 65; 161, 165) for forming one-way fluid passage into and out of said inner space; and means for energising said driving and/or reciprocating members; wherein each said driving member has an outer pole (34; 134) and a coaxial inner pole (36; 136), and said reciprocating member has complementary poles so that when energised, said two driving members produce onto said reciprocating member a push-and-pull driving force pair to cause its linear movement.

3. An apparatus of claim I or claim 2, wherein said driving members are electromagnets and said reciprocating member has permanent magnet.

4. An apparatus of claim 1 or claim 2, wherein the poles of said reciprocating member are electromagnetic.

5. An apparatus of any preceding claim, wherein said poles of said driving and reciprocating members are annular with a substantially conical pole face to match one another.

6. An apparatus of any preceding claim, wherein said reciprocating member carries two magnets magnetically insulated from each other, each forms the inner and outer poles facing one of said two driving members.

7. An apparatus of any of claims 1 to 5, wherein said reciprocating member has a magnet with radially directed poles and inner and outer pole pieces providing pole faces facing said driving members.

8. An apparatus of claim 7, wherein said magnet is biased relative to said inner and/or outer pole pieces.

9. An apparatus of any of claim 7 or claim 8, wherein said reciprocating member has a movable magnetic shunt mechanism for regulating magnetic flux to said driving members.

10. An apparatus of claim 9, further comprising secondary permanent magnet means fitted to each axial end of said shunt mechanism and/or said outer pole piece.

11. An apparatus of any preceding claim, wherein said reciprocating and driving members are protected by buffer means including seal for fluid cushioning, spring for elastic cushioning and/or magnetic cushion means.

12. An apparatus of any of claims 9 to 11, wherein said biasing means, shunt mechanism and/or buffer means are adapted to balance said reciprocating member's axial movements.

13. An apparatus of any preceding claim, further comprising magnetic coupling means with movable members for selectively adjusting each driving member's magnetic flux.

14. An apparatus of any preceding claim, further comprising means for detecting the position of said reciprocating member and means for adjusting current thereto accordingly.

15. An apparatus of any preceding claim, further comprising movable means for supporting at least one said driving member and means for biasing its position in response to load on said reciprocating member.

16. An apparatus of any preceding claim, further comprising capillary means for circulating a lubricant.

17. An apparatus of any of claims 2 to 17, wherein said piston has fluid passage means and/or magnetic means for causing it to rotate during its reciprocating movements.

## Patentansprüche

1. Linearmotor (10; 100; 200; 300; 500), dadurch gekennzeichnet, daß er umfaßt: zwei einander gegenüberliegende Magnetantriebselemente (30; 130; 230; 530), ein Hin- und Herbewegungselement (50; 150; 250; 560; 600), das zwischen den beiden Antriebselementen angeordnet ist; und Mittel, um die Antriebselemente und/oder das Hin- und Herbewegungselement mit Energie zu beaufschlagen, worin jedes solche Antriebselement einen Außenpol (34; 134) und einen koaxialen Innenpol (36; 136) und das Hin- und Herbewegungselement komplementäre Pole aufweist, so daß, wenn sie mit Energie beaufschlagt werden, die beiden Antriebselemente ein Schub-und-Zug-Antriebskräftepaar am Hin- und Herbewegungselement erzeugen, wodurch seine lineare Bewegung verursacht wird.

2. Linearmotor-Kompressor (10; 100; 200; 300; 500), dadurch gekennzeichnet, daß er umfaßt: einen Zylinder (20, 120; 210, 510), der an seinen beiden Enden mit einander gegenüberliegenden Magnetantriebselementen (30; 130; 230; 530) versehen ist, um einen Innenraum darin zu definieren; ein Hin- und Herbewegungselement, das einen Kolben (50; 150; 250; 560; 600) bildet, der im Innenraum zwischen den beiden Antriebselementen angeordnet ist; Ventilmittel (61, 63, 65; 161, 165) zum Ausbilden eines Einweg-Fluiddurchgangs in den Innenraum hinein und aus diesem heraus; und Mittel, um die Antriebselemente und/oder das Hin- und Herbewegungselement mit Energie zu beaufschlagen; worin jedes solche Antriebselement einen Außenpol (34; 134) und einen koaxialen Innenpol (36; 136) aufweist und das Hin- und Herbewegungselement komplementäre Pole aufweist, so daß die beiden Antriebselemente, wenn sie mit Energie beaufschlagt werden, ein Schub-und-Zug-Antriebskräftepaar auf dem Hin- und Herbewegungselement erzeugen, wodurch seine lineare Bewegung verursacht wird.

3. Vorrichtung nach Anspruch 1 oder 2, worin die Antriebselemente Elektromagnete sind und das Hin- und Herbewegungselement einen Permanentmagnet aufweist.

4. Vorrichtung nach Anspruch 1 oder 2, worin die Pole des Hin- und Herbewegungselements elektromagnetisch sind.

5. Vorrichtung nach einem der vorangegangenen Ansprüche, worin die Pole des Hinund Herbewegungselements ringförmig mit einer im wesentlichen konischen Polfläche sind, so daß sie zueinander passen.

6. Vorrichtung nach einem der vorangegangenen Ansprüche, worin das Hin- und Herbewegungselement zwei Magnete trägt, die magnetisch voneinander isoliert sind, wobei jeder den Innen- und den Außenpol bildet, die einem der beiden Antriebselemente zugewandt sind.

7. Vorrichtung nach einem der Ansprüche 1 bis 5, worin das Hin- und Herbewegungselement einen Magneten mit radial gerichteten Polen und Innen- und Außenpolstücken aufweist, die Polflächen bereitstellen, die den Antriebselementen zugewandt sind.

8. Vorrichtung nach Anspruch 7, worin der Magnet in bezug auf die Innen- und/oder Außenpolstücke vorgespannt ist.

9. Vorrichtung nach einem der Ansprüche 7 oder 8, worin das Hin- und Herbewegungselement einen beweglichen magnetischen Shunt-Mechanismus aufweist, um den Magnetfluß zu den Antriebselementen zu regeln.

10. Vorrichtung nach Anspruch 9, die weiters sekundäre Permanentmagnetmittel umfaßt, die an jedem axialen Ende des Shunt-Mechanismus und/oder des Außenpolstücks vorgesehen sind.

11. Vorrichtung nach einem der vorangegangenen Ansprüche, worin das Hin- und Herbewegungselement und die Antriebselemente durch Puffermittel geschützt sind, die eine Dichtung zur Fluiddämpfung, eine Feder zur elastischen Dämpfung und/oder magnetische Dämptungsmittel umfassen.

12. Vorrichtung nach einem der Ansprüche 9 bis 11, worin das Vorspannmittel, der Shunt-Mechanismus und/oder die Puffermittel so ausgebildet sind, daß sie die Axialbewegungen des Hin- und Herbewegungselements ausgleichen.

13. Vorrichtung nach einem der vorangegangenen Ansprüche, die weiters Magnetkopplungsmittel mit beweglichen Elementen umfassen, um den Magnetfluß eines jeden Antriebselements selektiv einzustellen.

14. Vorrichtung nach einem der vorangegangenen Ansprüche, weiters umfassend Mittel zum Detektieren der Position des Hin- und Herbewegungselements und Mittel, um den Strom zu diesem hin entsprechend einzustellen.

15. Vorrichtung nach einem der vorangegangenen Ansprüche, weiters umfassend bewegliche Mittel zum Halten zumindest eines solchen Antriebselements und Mittel zum Vorspannen seiner Position als Reaktion auf Belastung auf das Hin- und Herbewegungselement.

16. Vorrichtung nach einem der vorangegangenen Ansprüche, weiters umfassend Kapillarmittel zum Zirkulierenlassen eines Schmiermittels.

17. Vorrichtung nach einem der Ansprüche 2 bis 17, worin der Kolben Fluiddurchgangsmittel und/oder Magnetmittel aufweist, um zu bewirken, daß er sich während seiner Hin- und Herbewegungen dreht.

## Revendications

1. Moteur linéaire (10; 100; 200; 300; 500) caractérisé en ce qu'il comporte : deux organes magnétiques d'entraînement opposés (30; 130; 230; 530); un organe se déplaçant en va-et-vient (50; 150; 250; 560; 600) disposé entre lesdits deux organes d'entraînement; et des moyens pour alimenter en énergie lesdits organes d'entraînement et/ou lesdits organes se déplaçant en va-et-vient; dans lequel chaque dit organe d'entraînement présente un pôle extérieur (34; 134) et un pôle intérieur (36; 136) coaxial, et ledit organe se déplaçant en va-et-vient présente des pôles complémentaires de telle sorte que lorsqu'ils sont alimentés en énergie, lesdits deux organes d'entraînement produisent sur ledit organe se déplaçant en va-et-vient une paire de forces d'entraînement de poussée et de traction pour entraîner son déplacement linéaire.

2. Compresseur à moteur linéaire (10; 100; 200; 300; 500), caractérisé en ce qu'il comporte : un cylindre (20; 120; 210; 510) équipé à ses deux extrémités de deux organes magnétiques d'entraînement opposés (30; 130; 230; 530) de manière à y définir un espace intérieur; un organe se déplaçant en va-et-vient, formant un piston (50; 150; 250; 560; 600) disposé dans ledit espace intérieur entre lesdits deux organes d'entraînement; des moyens à vanne (61,63,65; 161, 165) pour former un passage de fluide unidirectionnel dans et hors dudit espace intérieur; et des moyens pour alimenter en énergie lesdits organes d'entraînement et/ou se déplaçant en va-et-vient; dans lequel chaque dit organe d'entraînement présente un pôle extérieur (34; 134) et un pôle intérieur (36; 136) coaxial, et ledit organe se déplaçant en va-et-vient présente des pôles complémentaires de telle sorte que lorsqu'ils sont alimentés en énergie, lesdits deux organes d'entraînement produisent sur ledit organe se déplaçant en va-et-vient une paire de forces d'entraînement de poussée et de traction pour entraîner son déplacement linéaire.

3. Appareil selon la revendication 1 ou la revendication 2, dans lequel lesdits organes d'entraînement sont des électroaimants et ledit organe se déplaçant en va-et-vient présente un aimant permanent.

4. Appareil selon la revendication 1 ou la revendication 2, dans lequel les pôles dudit organe se déplaçant en va-et-vient sont électromagnétiques.

5. Appareil selon l'une quelconque des revendications précédentes, dans lequel lesdits pôles desdits organes d'entraînement et desdits organes se déplaçant en va-et-vient sont annulaires avec une surface de pôle essentiellement conique pour être complémentaires l'un de l'autre.

6. Appareil selon l'une quelconque des revendications précédentes, dans lequel ledit organe se déplaçant en va-et-vient porte deux aimants isolés magnétiquement l'un de l'autre, chacun formant le pôle intérieur et le pôle extérieur tournés vers l'un desdits deux organes d'entraînement.

7. Appareil selon l'une quelconque des revendications 1 à 5, dans lequel ledit organe se déplaçant en va-et-vient présente un aimant doté de pôles dirigés radialement et une pièce polaire intérieure et une pièce polaire extérieure fournissant les surfaces de pôle tournées vers lesdits deux organes d'entraînement.

8. Appareil selon la revendication 7, dans lequel ledit aimant est sollicité vers ladite pièce polaire intérieure et/ou vers ladite pièce polaire extérieure.

9. Appareil selon l'une quelconque de la revendication 7 ou de la revendication 8, dans lequel ledit organe se déplaçant en va-et-vient présente un mécanisme mobile de shunt magnétique pour réguler le flux magnétique vers lesdits organes d'entraînement.

10. Appareil selon la revendication 9, comportant en outre un moyen à aimant permanent secondaire installé sur chaque extrémité axiale dudit mécanisme de shunt et/ou de ladite pièce polaire extérieure.

11. Appareil selon l'une quelconque des revendications précédentes, dans lequel ledit organe se déplaçant en va-et-vient et lesdits organes d'entraînement sont protégés par des moyens d'amortissement comportant un joint d'étanchéité pour l'amortissement par un fluide, un ressort pour l'amortissement élastique et/ou un moyen magnétique d'amortissement.

12. Appareil selon l'une quelconque des revendications 9 à 11, dans lequel ledit moyen de polarisation, ledit mécanisme de shunt et/ou lesdits moyens d'amortissement sont adaptés pour équilibrer lesdits déplacements axiaux de l'organe se déplaçant en va-et-vient.

13. Appareil selon l'une quelconque des revendications précédentes, comportant en outre un moyen de couplage magnétique doté d'organes mobiles pour ajuster sélectivement le flux magnétique de chaque organe d'entraînement.

14. Appareil selon l'une quelconque des revendications précédentes, comportant en outre un moyen pour détecter la position dudit organe se déplaçant en va-et-vient et un moyen pour ajuster de manière correspondante le courant qui lui est délivré.

15. Appareil selon l'une quelconque des revendications précédentes, comportant en outre un moyen mobile pour soutenir au moins l'un desdits organes d'entraînement et un moyen pour déplacer sa position en réponse à la charge exercée sur ledit organe se déplaçant en va-et-vient.

16. Appareil selon l'une quelconque des revendications précédentes, comportant en outre un moyen à capillaire pour la mise en circulation d'un lubrifiant.

17. Appareil selon l'une quelconque des revendications 2 à 17, dans lequel ledit piston présente un moyen à passage de fluide et/ou des moyens magnétiques pour le faire tourner pendant ses déplacements en va-et-vient.
